# EUROPÄISCHE PATENTSCHRIFT

(11) **EP 1 115 624 B1**
(45) Veröffentlichungstag und Bekanntmachung des Hinweises auf die Patenterteilung: **26.03.2003**
(21) Anmeldenummer: 99947312.7
(22) Anmeldetag: 10.09.1999
(51) Int. Cl.: B65D 23/12, G01F 19/00, B05B 11/00

(54) **DOSSIERBEHÄLTER ZUR MEHRFACHENTNAHME FLIESSFÄHIGER ANWENDUNGSPRODUKTE IM GESUNDHEITSBEREICH**
DOSING CONTAINER FOR REPEATEDLY WITHDRAWING FLOWABLE ADMINISTRATION PRODUCTS USED IN HEALTH CARE
RECIPIENT DOSEUR POUR PRELEVEMENT MULTIPLE DE PRODUITS COULANTS DANS LE SECTEUR DE LA SANTE

(30) Priorität: 23.09.1998 DE 19843554
(43) Veröffentlichungstag der Anmeldung: 18.07.2001
(73) Patentinhaber: Bayer CropScience AG, 40789 Monheim (DE)
(72) Erfinder: BAYER, Michael, D-51107 Köln (DE)
(86) Internationale Anmeldenummer: EP9906704
(87) Internationale Veröffentlichungsnummer: WO00017061

(56) Entgegenhaltungen:
- US-A- 4 925 066
- US-A- 5 054 656
- US-A- 5 469 993

## Beschreibung

Die Erfindung betrifft einen Dosierbehälter aus transparentem Werkstoff zur Mehrfachentnahme fließfähiger Anwendungsprodukte fiir Tier oder Mensch im Gesundheitsbereich, mit über die gesamte vorgesehene Füllhöhe gleichbleibendem Füllquerschnitt.

Bei vielen Anwendungsprodukten, insbesondere im Tier-Gesundheitsbereich, z.B. bei Tierarzneimitteln oder bei Produkten zur Parasitenbekämpfung, ist die zu verabreichende Menge bzw. das Volumen pro Behandlung abhängig vom Körpergewicht des zu behandelnden Tieres. Dieses Körpergewicht kann auch innerhalb derselben Tierart sehr unterschiedlich sein, wie beispielsweise bei Hunden. Für den jeweiligen Tierhalter bedeutet dies, daß einem Produktbehälter genau das für sein Tier richtige Produktvolumen entnommen werden muß, wozu der Produkthersteller in der Regel eine Applizieranweisung erstellt und der Packung beigelegt hat.

Bei oral zu verabreichenden, fließfähigen, d.h. flüssigen bis leicht pastösen, Mitteln, oder bei pulvrigen bis körnigen Mitteln ist dem Behälter bzw. der Packung in der Regel ein Meßbecher oder Meßlöffel beigefügt. Nachteilig ist dabei, daß das erforderliche Meßgefäß lose beiliegt. Schraubkappen mit Dosierskala sind nicht überall einsetzbar und haben außerdem den Nachteil, daß sie nur kleines Volumen besitzen und daß das Einfüllen mit einigem Geschick vorgenommen werden muß. Behälter für Flüssigprodukte besitzen häufig eine aufgedruckte oder eingeprägte Meßskala, welche durch Vergleich mit dem jeweiligen Füllspiegel eine Dosierung ermöglicht.

Bei Spraymitteln werden u.a. die üblichen Spraybehälter mit handbetätigbarer Spraypumpe verwendet. Die Dosierung bereitet jedoch Schwierigkeiten. Vom Hersteller läßt sich zwar pro Sprayhub ein bestimmtes Hubvolumen ermitteln und ist für die Behandlung je kg Körpergewicht in Tabellenform angegeben. Nachdem der Anwender die dem Gewicht seines Tieres entsprechend notwendige Hubzahl von der Tabelle abgelesen hat, muß er bei jeder Anwendung die Hübe genau mitzählen. Beispielsweise wären bei einem Behandlungsvolumen von 50 ml und 1 ml Förderung pro Sprayhub 50 Hübe erforderlich! Bei solch großen aufzusprühenden Produktmengen ist dies dem Anwender unzumutbar und kann leicht durch Verzählen zu ungenauen Dosierungen führen.

Es besteht die Aufgabe, zur Mehrfachentnahme fließfähiger Anwendungsprodukte für Mensch oder Tier im Gesundheitsbereich einen Dosierbehälter mit einer einfach zu handhabenden, ausreichend genauen Dosiermöglichkeit zu schaffen, wobei der damit verbundene Aufwand in einem gesunden Verhältnis zum Nutzen steht.

Diese Aufgabe wird gelöst durch einen mit einer Skala versehenen, über die gesamte Füllhöhe dieses Dosierbehälters verstellbaren, an ihm mit Klemmwirkung gehaltenen und mit einem bestimmten Skalenwert auf die aktuelle Füllhöhe einstellbaren Dosierschieber.

Es liegt dabei auf der Hand, daß sich für eine exakte Bestimmung des Behandlungsvolumens der Dosierbehälter zu Beginn und Ende der Behandlung in Senkrechtposition befinden muß.

Von Vorteil ist es dabei, daß nach der Einstellung des Skalenwertes mittels des Dosierschiebers in Senkrechtposition dieses Dosierbehälters nun so viel Anwendungsprodukt dosiert werden kann, bis die Füllhöhe auf den Nullwert der Skala in Senkrechtposition des Dosierbehälters abgesunken ist. Der neue Dosierbehälter ist für neben den ausreichend fließfähigen Anwendungsprodukten insbesondere für flüssige geeignet.

Gemäß einer besonderen Ausführungsform ist es vorteilhaft, daß die Skala des Dosierschiebers von einem Nullwert bis mindestens zum maximal üblichen Körpergewicht des zu behandelnden Objektes (Tier oder Mensch) reicht, und daß die Skala auf das je Kilogramm Körpergewicht des zu behandelnden Objektes zu dosierende Volumen des Anwendungsproduktes abgestimmt ist, wobei der dem aktuellen Körpergewicht des zu behandelnden Objektes entsprechende Skalenwert in Senkrechtposition des Dosierbehälters auf die Füllhöhe im Dosierbereich einstellbar ist, und wobei der Nullwert der Skala die nach der Behandlung des Objektes verbleibende Füllhöhe in Senkrechtposition des Dosierbehälters anzeigt.

Es versteht sich, daß der neue Gedanke auch die Inversion umfaßt, d.h. daß die Skala von einem Nullwert senkrecht abwärts verläuft. Dabei wird mittels des Dosierschiebers der Nullwert der Skala auf die Ausgangsfüllhöhe des Dosierbehälters eingestellt und dann so lange dosiert, bis in Senkrechtposition des Dosierbehälters mit der neuen, um das Behandlungsvolumen geringeren Füllhöhe der dem Körpergewicht des zu behandelnden Objektes entsprechende Skalenwert erreicht ist. Dabei ist allerdings von Nachteil, daß dieser Skalenwert immer wieder gesucht werden muß oder er muß vorher markiert werden. Demgegenüber ist bei der normalen Ausführungsform der Nullwert der Skala als Marke fiir die verbleibende Füllhöhe stets eindeutig erkennbar.

Gemäß einer besonderen Ausführungsform ist der neue Dosierbehälter durch je eine senkrechte Führungsschiene auf jeder Seite für eingreifende, am Dosierschieber angeordnete Klemmkufen gekennzeichnet.

Auf diese Weise wird erreicht, daß die beispielsweise flanken- oder klammerartigen Klemmkufen des Dosierschiebers in Querrichtung zum Dosierbehälter auf diesen eine Klemmwirkung ausüben. Die Ausführung als flacher bzw. schmaler Dosierbehälter kommt der Anordnung von Führungsschienen bei entsprechender Gestaltung des Dosierschiebers entgegen. Die Klemmwirkung läßt sich aber auch in Richtung der Flach- bzw. Breitseiten des Dosierbehälters ausüben.

Es ist natürlich darauf zu achten, daß die Klemmwirkung das richtige Maß hat. Ist sie zu gering, rutscht der Dosierschieber in unerwünschter Weise von alleine; ist sie zu fest, läßt sich der Dosierschieber nicht oder nur schwer verstellen. Da in der Regel sowohl der Dosierbehälter als auch der Dosierschieber aus Kunststoff, wie beispielsweise Polyethylen, bestehen, läßt sich zumindest eines der beiden Teile mit der notwendigen Elastizität ausführen.

Vorzugsweise besteht der Dosierschieber aus transparentem Werkstoff.

Dies hat den Vorteil daß die Einstellung des bestimmten Skalenwertes auf die aktuelle Füllhöhe in Senkrechtposition des Dosierbehälters besser vornehmbar ist. Verläuft die Skala beidseitig des Dosierschiebers oder sind zwei gleiche Skalen genau gegenüberliegend angebracht, so läßt sich der bestimmte Skalenwert mit dem Dosierschieber durch zur Deckungbringen der dem Skalenwert entsprechenden Striche besonders gut auf die aktuelle Füllhöhe einstellen.

Gemäß einer besonderen Ausführungsform besteht der Dosierbehälter aus einem Spraybehälter.

Es hat sich gezeigt, daß der neue Dosierbehälter für die Sprühanwendung besonders geeignet ist, also insbesondere für die Behandlung von mit Parasiten befallenen Tieren.

In der Regel verläuft die Skala des Dosierschiebers linear. d.h., die Skaleneinteilung ist in gleich große Skalenwerte eingestellt, so daß dem Abstand zweier Skalenwerte stets das gleiche Dosiervolumen entspricht.

Gemäß einer vorteilhaften Variante aber weist der Dosierschieber eine über ihre Länge veränderte Einteilung der Skala auf.

Dies ist von Vorteil, wenn leichten und schweren Objekten der gleichen Art oder verschiedener Arten pro Kilogramm Körpergewicht unterschiedliche Dosiermengen verabreicht werden sollen. D.h., dann hat die Skala im unteren Skalenbereich einen anderen Strichabstand als im oberen, wobei der Übergang in der Regel stetig ist.

Aufgrund empirischer Ermittlungen kann demnach die Skala z.B. nach einer Potential-, Exponentialfunktion oder einer logarithmischen Funktion verlaufen, so daß Objekten der gleichen Art mit niederem Körpergewicht, beispielsweise Zwerghunden, entweder mehr oder weniger Dosiervolumen je Kilogramm Körpergewicht zugeordnet ist als solchen mit höherem Körpergewicht, beispielsweise Doggen. Der neue Dosierbehälter ist dadurch in einem größeren Bereich einsetzbar.

Vorzugsweise ist der Dosierschieber gegen einen solchen mit einer anderen Einteilung der Skala austauschbar.

Dadurch ist es zumindest theoretisch möglich, den gleichen Dosierbehälter für verschiedene Anwendungsprodukte und Anwendungsfälle zu benutzen. Die Austauschbarkeit bereitet keine Probleme, da das Material von Dosierbehälter und/oder Dosierschieber in der Regel ausreichend elastisch ist.

Gemäß einer weiteren besonderen Ausführungsform weist der Dosierschieber mehrere Skalen mit unterschiedlicher Einteilung auf.

So ist beispielsweise auf jeder Flanke des Dosierschiebers je eine Skala angeordnet, wovon eine z.B. für die Behandlung von Hunden und die andere für die Behandlung von Katzen zu benutzen ist, also ist sozusagen eine der Skalen auf der Vorderseite, die andere auf der Rückseite des Dosierschiebers angeordnet. Bei gleichem-Anwendungsprodukt für verschiedene Objektarten benötigt der Anwender für diese beiden Objcktarten in vorteilhafter Weise nur einen einzigen Dosierbehälter.

Der neue Dosierbehälter ist in Form eines Spraybehälters in einem Ausführungsbeispiel rein schematisch dargestellt und nachstehend näher erläutert. Es zeigen:
Fig. 1 den Spraybehälter in der Seitenansicht,
Fig. 2 den Spraybehälter gemäß Schnitt A-B in Fig. 1 und
Fig. 3 einen Dosierschieber mit einer besonderen Skaleneinteilung in der Seitenansicht.

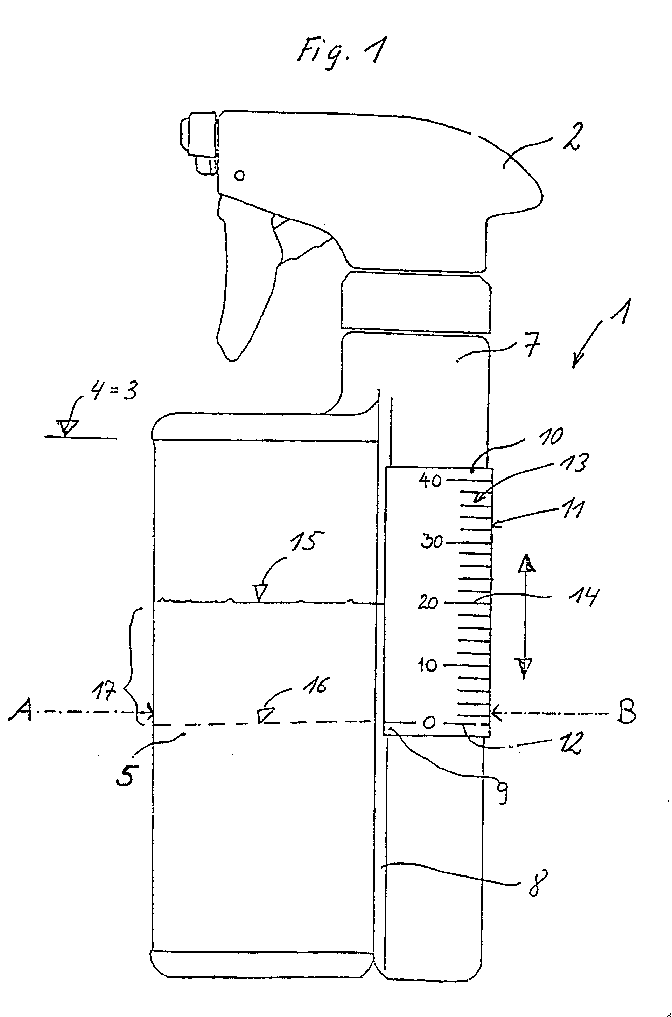

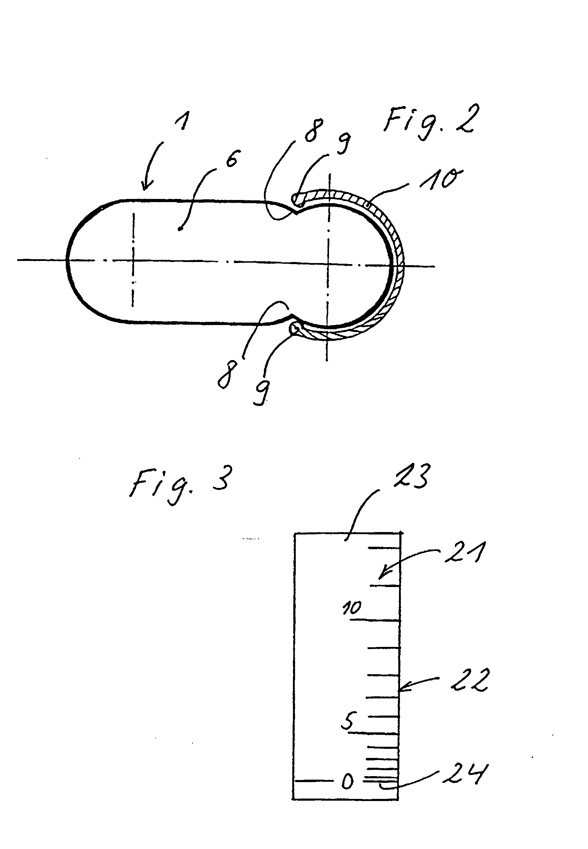

In Fig. 1, 2 weist der Spraybehälter 1 einen aufgeschraubten handelsüblichen Spraykopf 2 auf. Die Gesamtfüllhöhe 3 entspricht der Höhe 4 des eigentlichen Füllbehälters 5, welcher überall gleichen Füllquerschnitt 6 besitzt, und an welchen sich zum Spraykopf 2 hin ein Hals 7 anschließt. Der eigentliche Füllbehälter 5 weist beidseitig in senkrechter Richtung verlaufende Führungsschienen 8 auf, in welche Klemmkufen 9 eines aus transparentem Werkstoff bestehenden Dosierschiebers 10 eingreifen. Dieser Dosierschieber 10 ist mit einer Skala 11 versehen, welche auf die Dosiermenge je Kilogramm Körpergewicht des zu behandelnden Tieres abgestimmt ist, indem die Skalenstriche das Spektrum des Körpergewichtes der zu behandelnden Tierart anzeigen. Die Skala 11 verläuft von einem Nullwert 12 aufwärts und erstreckt sich in linearer Einteilung 13 bis zum erfahrungsgemäß maximalen Körpergewicht der zu behandelnden Tierart. Das aktuelle Körpergewicht des zu behandelnden Tieres ist an der Skala 11 als Skalenwert 14 ablesbar und dieser ist in Senkrechtposition des Spraybehälters 1 mittels des Dosierschiebers 11 auf das Niveau der aktuellen Füllhöhe 15 einstellbar. Die Behandlung kann nun durchgeführt werden und ist zu beenden, sobald die neue Füllhöhe 16 erreicht ist, welche in Senkrechtposition des Spraybehälters 1 bei unveränderter Position des Dosierschiebers 10 dem Niveau des Nullwertes 12 entspricht. Dieses Behandlungsvolumen 17 des Anwendungsproduktes entspricht also der Füllvolumendifferenz zwischen dem Nullwert 12 und dem dem Körpergewicht-des Tieres entsprechenden Skalenwert 14. Auf der Rückseite des Dosierschiebers 10 ist eine zweite Skala 11 angeordnet, deren Einteilung kleineren Strichabstand aufweist, und für die Behandlung einer anderen Tierart vorgesehen ist. Dabei ist natürlich Voraussetzung, daß zum einen das im Spraybehälter 1 befindliche Anwendungsprodukt für beide Tierarten geeignet sein muß, und daß zum anderen je Kilogramm Körpergewicht der Tiere der beiden Arten unterschiedliche Dosiermengen vorgeschrieben sind. Der Anwender kann dann je nach der Tierart die zugehörige Skala auswählen.

In Fig. 3 ist die Einteilung 21 der Skala 22 des Dosierschiebers 23 über ihre Länge verändert. Vom Nullwert 24 aufwärts nimmt der Strichabstand stetig zu. D.h., daß relativ gesehen kleineren Tieren der gleichen Art ein kleineres Dosiervolumen je Kilogramm Körpergewicht zugeordnet ist als den größeren. Natürlich kann der Strichabstand auch nach oben abnehmen, falls für größere Tiere eine kleinere Dosiermenge vorgeschrieben sein sollte, was keiner besonderen Darstellung bedarf.

## Patentansprüche

1. Dosierbehälter (1) aus transparentem Werkstoff zur Mehrfachentnahme fließfähiger Anwendungsprodukte für Tier oder Mensch im Gesundheitsbereich, mit über die gesamte vorgesehene Füllhöhe (3) gleichbleibendem Füllquerschnitt (6), **gekennzeichnet durch** einen mit einer Skala (11, 22) versehenen, über die gesamte Füllhöhe (3) des eigentlichen Behälters (5) verstellbaren, an ihm mit Klemmwirkung gehaltenen und mit einem bestimmten Skalenwert (14) auf die aktuelle Füllhöhe (15) einstellbaren Dosierschieber (10, 23).

2. Dosierbehälter nach Anspruch 1, **dadurch gekennzeichnet, daß** die Skala (11, 22) des Dosierschiebers (10, 23) von einem Nullwert (12, 24) bis mindestens zum maximal üblichen Körpergewicht der zu behandelnden Objektart reicht, und daß die Skala (11, 22) auf das je Kilogramm Körpergewicht des zu behandelnden Objektes zu dosierende Volumen des Anwendungsproduktes abgestimmt ist, wobei der dem aktuellen Körpergewicht des zu behandelnden Objektes entsprechende Skalenwert (14) in Senkrechtposition des Dosierbehälters (1) auf die Füllhöhe (15) im Dosierbehälter (1) einstellbar ist, und wobei der Nullwert (12, 24) der Skala die nach der Behandlung des Tieres oder des Menschen verbleibende Füllhöhe (16) in Senkrechtposition des Dosierbehälters (1) anzeigt.

3. Dosierbehälter nach einem der Ansprüche 1 oder 2, **gekennzeichnet durch** je eine senkrechte Führungsschiene (8) auf jeder Seite für eingreifende, am Dosierschieber (10) angeordnete Klemmkufen (9).

4. Dosierbehälter nach einem der Ansprüche 1 bis 3, **dadurch gekennzeichnet, daß** der Dosierschieber (10, 23) aus transparentem Werkstoff besteht.

5. Dosierbehälter nach einem der Ansprüche 1 bis 4, **dadurch gekennzeichnet, daß** er aus einem Spraybehälter (1) besteht.

6. Dosierbehälter nach einem der Ansprüche 1 bis 5, **gekennzeichnet durch** eine über ihre Länge veränderte Einteilung (21) der Skala (22) des Dosierschiebers (23).

7. Dosierbehälter nach einem der Ansprüche 1 bis 6, **dadurch gekennzeichnet, daß** der Dosierschieber (10, 23) gegen einen solchen mit einer anderen Einteilung (13, 21) der Skala (11, 22) austauschbar ist.

8. Dosierbehälter nach einem der Ansprüche 1 bis 7, **dadurch gekennzeichnet, daß** der Dosierschieber (10) mehrere unterschiedliche Skalen (11, 22) aufweist.

## Claims

1. Dosing container (1) made of transparent material for the multiple removal of free-flowing application products for animal or human health, having a filling cross section (6) which is constant over the entire filling height (3) provided, **characterized by** a dosing slide (10, 23) which is provided with a scale (11, 22), can be adjusted over the entire filling height (3) of the actual container (5), is retained on said container by clamping action and can be set to the current filling height (15) by a certain scale value (14).

2. Dosing container according to Claim 1, **characterized in that** the scale (11, 22) of the dosing slide (10, 23) extends from a zero value (12, 24) to at least the maximum conventional body weight of the species which is to be treated, and **in that** the scale (11, 22) is coordinated with the application-product volume which is to be dosed per kilogram of body weight of the subject which is to be treated, it being possible for the scale value (14) corresponding to the current body weight of the subject which is to be treated to be set to the filling height (15) in the dosing container (1) in the vertical position of the dosing container (1), and the zero value (12, 24) of the scale indicating, in the vertical position of the dosing container (1), the filling height (16) remaining following the treatment of the animal or of the human.

3. Dosing container according to either of Claims 1 and 2, **characterized by** in each case a vertical guide rail (8) on each side for engaging clamping runners (9) arranged on the dosing slide (10).

4. Dosing container according to one of Claims 1 to 3, **characterized in that** the dosing slide (10, 23) consists of transparent material.

5. Dosing container according to one of Claims 1 to 4, **characterized in that** it comprises a spray container (1).

6. Dosing container according to one of Claims 1 to 5, **characterized by** the scale (22) of the dosing slide (23) having a graduation (21) which changes over its length.

7. Dosing container according to one of Claims 1 to 6, **characterized in that** the dosing slide (10, 23) can be exchanged for one in which the scale (11, 22) has a different graduation (13, 21).

8. Dosing container according to one of Claims 1 to 7, **characterized in that** the dosing slide (10) has a plurality of different scales (11, 22).

## Revendications

1. Récipient doseur (1) en matériau transparent pour prélèvements multiples de produits coulants pour animaux ou êtres humains dans le secteur de la santé, de section de remplissage (6) constante sur toute la hauteur de remplissage (3) prévue, **caractérisé par** une réglette de dosage (10, 23) pourvue d'une échelle graduée (11, 22), réglable sur toute la hauteur de remplissage (3) du récipient (5) proprement dit, maintenue sur celui-ci par effet de serrage et dont une valeur d'échelle (14) déterminée peut être réglée à la hauteur de remplissage (15) actuelle.

2. Récipient doseur suivant la revendication 1, **caractérisé en ce que** l'échelle graduée (11, 22) de la réglette de dosage (10, 23) s'étend d'une valeur zéro (12, 24) à au moins le poids corporel maximal habituel de l'espèce de patient à traiter et **en ce que** l'échelle graduée (11, 22) est adaptée au volume de produit à doser par kilogramme de poids corporel du patient à traiter, la valeur d'échelle (14) correspondant au poids corporel actuel du patient à traiter étant réglable en position verticale du récipient doseur (1) à la hauteur de remplissage (15) dans le récipient doseur (1) et la valeur zéro (12, 24) de l'échelle graduée indiquant la hauteur de remplissage (16) restante en position verticale du récipient doseur (1) après le traitement de l'animal ou de l'être humain.

3. Récipient doseur suivant l'une des revendications 1 ou 2, **caractérisé par** un rail de guidage vertical (8) pour des patins de serrage (9) disposés et faisant prise de chaque côté sur la réglette de dosage (10)

4. Récipient doseur suivant l'une des revendications 1 à 3, **caractérisé en ce que** la réglette de dosage (10, 23) est en matériau transparent.

5. Récipient doseur suivant l'une des revendications 1 à 4, **caractérisé en ce qu'**il est constitué d'un récipient de pulvérisation (1).

6. Récipient doseur suivant l'une des revendications 1 à 5, **caractérisé par** une division (21) variable en longueur de l'échelle graduée (22) de la réglette de dosage (23).

7. Récipient doseur suivant l'une des revendications 1 à 6, **caractérisé en ce que** la réglette de dosage (10, 23) peut être échangée contre une autre ayant une autre division (13, 21) de l'échelle graduée (11, 22).

8. Récipient doseur suivant l'une des revendications 1 à 7, **caractérisé en ce que** la réglette de dosage (10) présente plusieurs échelles graduées (11, 22) différentes.
